(19) Europäisches Patentamt

European Patent Office

Office européen des brevets

(11) Publication number: **0 480 593 A2**

# EUROPEAN PATENT APPLICATION

(21) Application number: **91308568.4**

(22) Date of filing: **19.09.91**

(51) Int. Cl.⁵: **G06F 3/12**

(30) Priority: **12.10.90 US 596252**

(43) Date of publication of application:
**15.04.92 Bulletin 92/16**

(84) Designated Contracting States:
**DE GB**

(71) Applicant: **Hewlett-Packard Company**
**3000 Hanover Street**
**Palo Alto, California 94304(US)**

(72) Inventor: **Kochis, Richard L.**
**2217 Brixton Road**

**Fort Collins, Colorado 80526(US)**
Inventor: **Erickson, Michael D.**
**451 East Boardwalk Drive, Apt. 819**
**Fort Collins, Colorado 80525(US)**
Inventor: **Hastings, Brian L.**
**3324 Dudley Way**
**Fort Collins, Colorado 80526(US)**

(74) Representative: **Colgan, Stephen James et al**
**CARPMAELS & RANSFORD 43 Bloomsbury**
**Square**
**London WC1A 2RA(GB)**

(54) **PCL vertical graphics scaling using macros.**

(57) Disclosed is a switch (104) that allows a peripheral device (106), such as a PCL printer, to be shared by multiple computer systems (102, 108). The switch (104) connects to each of the computer systems (102, 108), and also to the peripheral device (106) being shared. When the second of the two systems (108) requests access to the peripheral device (106), the switch (104) causes the peripheral device (106) to save its state temporarily while the second system (108) uses the device. The second system (108) prints graphics data on the printer (106), and scales the data as it is being printed. In one embodiment, for each line being printed, the system saves the printer state, sends the line of graphics to the printer (106), scales and prints the graphics, and restores the printer state. In another embodiment, all lines of graphics data are sent to the printer (106), then a command is sent to save the printer state, print all the lines, and restore the printer state.

FIG. 3

## FIELD OF THE INVENTION

This invention relates to computer systems and more particularly to printing graphics information on such systems. Even more particularly, the invention relates to scaling of the graphics being printed on a shared peripheral device.

## BACKGROUND OF THE INVENTION

In computer systems, particularly small or personal computer systems, peripheral devices make up a large part of the cost of the system. Where possible, it is desirable to share peripheral devices between several computer systems. When sharing peripheral devices, a shared device may sometimes have to be controlled to allow it to perform adequately for both systems.

When the device being shared is a printer, and one of the sharing systems is a facsimile device, the graphics facsimile output may need to be scaled to produce a standard sized printout. Since laser printers, such as the Hewlett Packard LaserJet series of printers, have a higher resolution than typical facsimile printers, the facsimile output must be sealed up. For example, a typical facsimile printer has a 200 X 100 or 200 X 200 dot per inch resolution whereas the Hewlett Packard LaserJet has a 300 X 300 dot per inch resolution. This requires that each line of facsimile graphics output be printed three times on the LaserJet, in order to reproduce the same paper size as the facsimile input.

In prior art systems this scaling has been accomplished by sending each line to the printer three times. The interface between the systems and the printer is either a serial interface, typically operating at 9600 bits per second, or is a parallel interface that is faster, however, the low performance of this transfer limits the overall performance of the system.

In small computer systems, especially personal computer systems, the hardware and operating system software may lack the sophistication necessary to allow easy sharing of peripheral devices. Therefore, if peripherals in such systems are to be shared, the user of the system must manually reinitialise the peripheral device each time the computer systems are switched. This is very time consuming, and very difficult if the computer systems that share the device are not in close proximity. Each time the interface to the peripheral is switched, the computer now having control of the peripheral must reinitialize the peripheral to reestablish the state of the peripheral device. In the case of printers, this reinitialization involves restoring the printing resolution, page orientation (landscape or portrait), margins, fonts selected, page size, and many other parameters. If the printer is being used by a word processing system, the user may not be aware of these parameters, and thus may be unable to reinitialize the printer to the state it had before being switched to the other computer system.

There is a need in the art then for a means of improving the transfer of multiple identical lines of data to a printer. There is further need for such a system that can accomplish this transfer while preserving the state of the printer for use by another system. The present invention meets these needs.

## SUMMARY OF THE INVENTION

It is an aspect of the present invention to provide a means of scaling data being printed.

It is another aspect of the present invention to allow a computer system and a fax sub-unit of a multi-functional peripheral device to share a peripheral device.

Still another aspect of the invention to cause the shared peripheral device to save its state temporarily while the second computer system is in control.

A further aspect of the invention is to transfer a line of data to be printed to a printer, and to print the line multiple times, thus avoiding transferring the line multiple times, while scaling the data being printed.

The above and other objects of the invention are accomplished in a switch that allows a peripheral device, such as a printer, to be shared by multiple computer systems. The switch connects to each of the computer systems, and also to the peripheral device being shared. The first system is considered the primary user of the peripheral device, so when the second system requests access to the peripheral device, the switch causes the peripheral device to save its state temporarily while the second system uses the device. When the second system's use is complete, the switch causes the peripheral device to restore its state to the last state established by the first system.

In one embodiment of the switch, a PCL printer, such a Hewlett Packard LaserJet Series II or Series III, is shared by a host computer system and a remote facsimile (FAX) device. When a line of data is received from the FAX, this data is placed into a PCL macro, and the macro is sent to the printer. When a macro is executed by a PCL printer, the printer will save its state, perform the macro, and restore its state. Therefore, if the line of FAX data is within a macro, the data will be printed, while the printer state will appear unchanged to the host computer system. While the FAX data is being received, the primary system will not be allowed to use the printer.

In a second embodiment, each line of data is sent to the printer as a macro, however, none of the macros are executed until all have been sent to the printer. After all the macros have been sent to the printer, another macro is sent that saves the printer state, executes all the line printing macros and then restores the printer state. The macros are then deleted to conserve memory.

## BRIEF DESCRIPTION OF THE DRAWINGS

The above and other objects, features, and advantages of the invention will be better understood by reading the following more particular description of the invention, presented in conjunction with the following drawings, wherein:

Fig. 1     shows a block diagram of the system of the present invention and its environment;

Fig. 2     shows a block diagram of the system being used to share a printer between a host computer and a remote fax machine;

Fig. 3     shows a block diagram of the multi-functional peripheral device, containing the switch of the present invention;

Fig. 4     shows a flowchart of the software within the switch of the present invention that sends and executes each line of data; and

Fig. 5     shows a flowchart of the alternative embodiment which sends all line macros, then sends a last macro to execute the line macros and delete them.

## DESCRIPTION OF THE PREFERRED EMBODIMENT

The following description is of the best presently contemplated mode of carrying out the present invention. This description is not to be taken in a limiting sense but is made merely for the purpose of describing the general principles of the invention. The scope of the invention should be determined by referencing the appended claims.

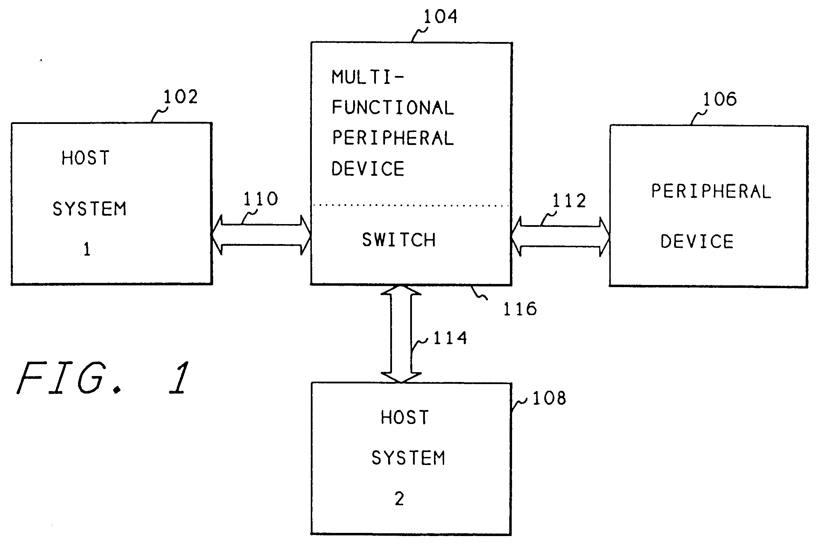

Fig. 1 shows a block diagram of the present invention and its environment. Referring now to Fig. 1, a first host system 102 is connected over a bus 110 to a multi-function peripheral device 104 which contains the switch 116 of the present invention. The switch 116 is connected via a bus 112 to a peripheral device 106 which is being shared. A second host system 108 is connected via a bus 114 to the switch 116. The switch 116 of the present invention allows the first host system 102 and the second host system 108 to share the peripheral device 106.

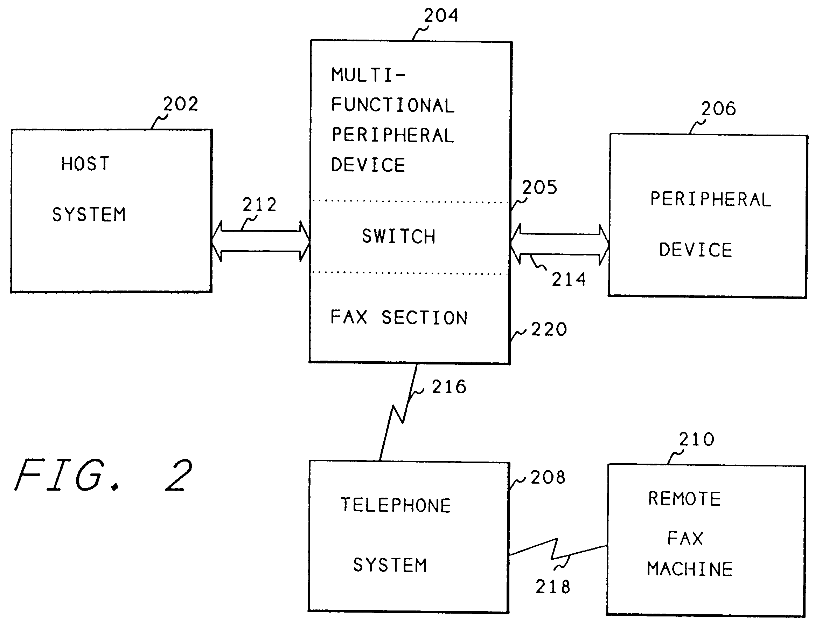

Fig. 2 shows a block diagram wherein the present invention is used to connect a host system and a remote FAX machine to a printer. Referring now to Fig. 2, a host system 202 is connected via a bus 212 to a multi-function peripheral device 204 which contains the switch 205 of the present invention. A remote FAX machine 210 is connected via wires 218 to a telephone system 208. The telephone system 208 is connected via wires 216 to the FAX section 220 of the multi-function peripheral device. The present invention 204, containing the switch 205, is connected via a bus 214 to a printer 206.

The switch 205 of the present invention, which is contained in the multi-functional peripheral device 204, allows the host system 202 to share the printer 206 with the remote FAX system 210. The multi-functional peripheral device 204 receives calls from the remote FAX machine 210 and the switch 205, within the multi-functional peripheral device 204, reconfigures the printer 206 to allow it to receive a FAX from the remote FAX machine 210. In a first embodiment, this reconfiguration is done by signaling the printer to save its state temporarily by sending the printer a macro, that includes the FAX data, for each line of FAX data. In a second embodiment, macros are sent for each line of FAX data, however, the macros are not executed. After the FAX transmission is complete, the switch 205 sends a last macro to the printer 206 to cause the printer 206 to save its state, execute the line printing macros to print the FAX data, and then restore the same state the printer was in prior to the FAX transmission. Therefore, the host system 202 is unaware that the printer has been used to receive a FAX.

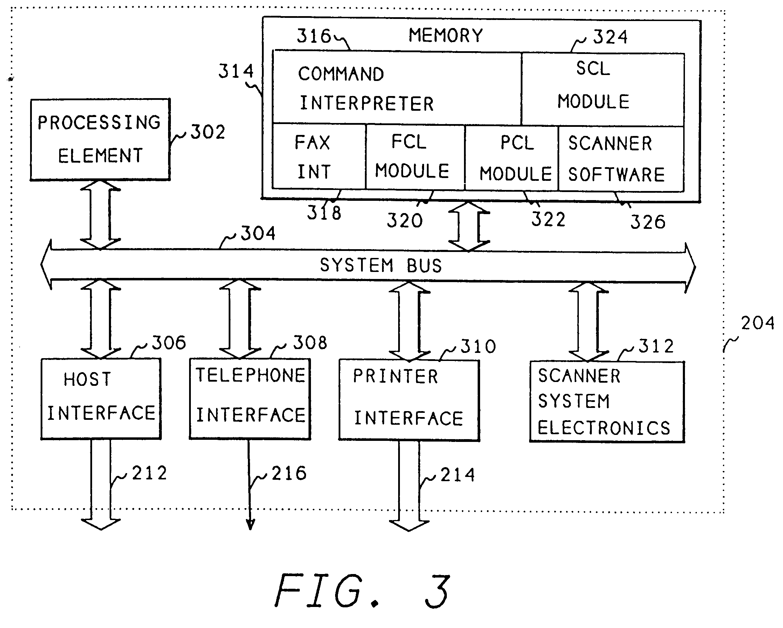

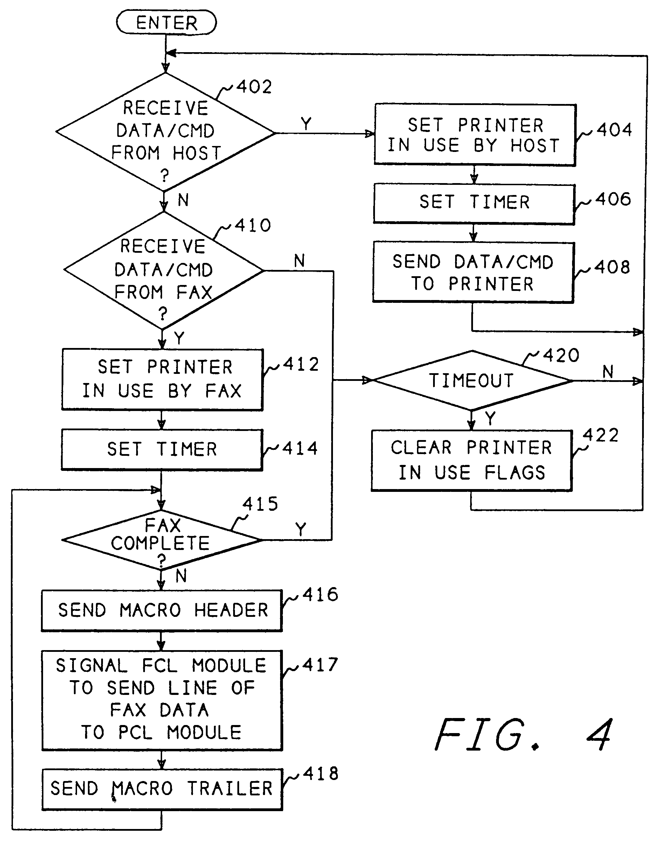

Figs. 3 and 4 show an example of the present invention, implemented to share a PCL printer, such as the Hewlett Packard LaserJet Series II or Series III, between a host computer and a remote FAX machine.

Fig. 3 shows a block diagram of the multi-functional peripheral device 204, which contains the switch of the present invention. Referring now to Fig. 3, the multi-functional peripheral device 204 contains a processor 302 which communicates to other elements of the system over a system bus 304. A host system interface 306 is used to communicate with the host system 202 over the bus 212. A telephone interface 308

3

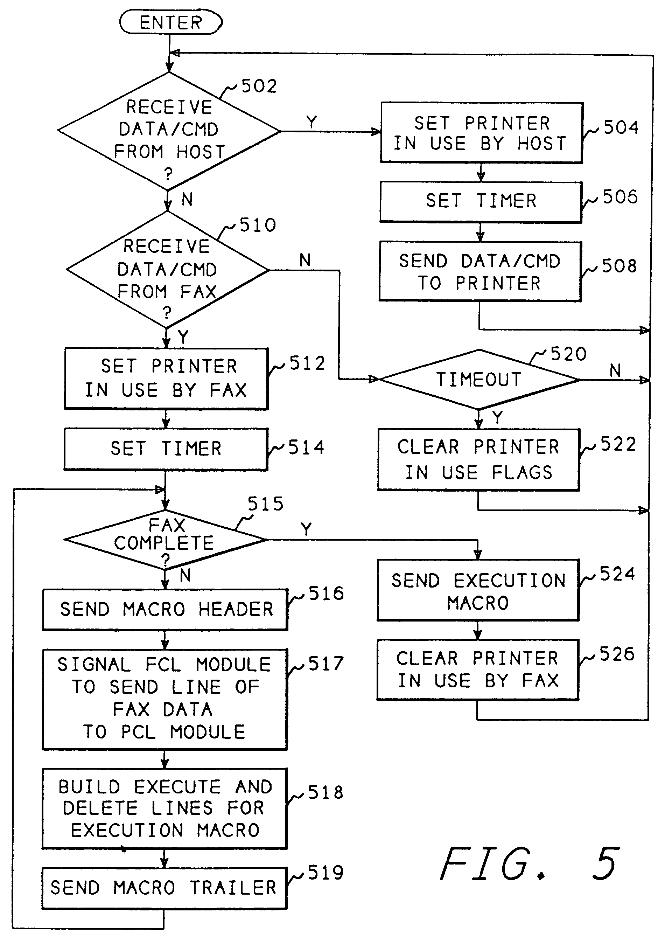

is used to communicate to the remote FAX 210 (Fig. 2) via the telephone system 208 (Fig. 2) over the bus 216. A printer interface 310 is used to send data to the printer 206 over the bus 214. Scanner system electronics 312 are used with a data scanning device which may also be part of the multi-functional peripheral device 204. A memory 314 contains a command interpreter 316 which receives commands from the host interface 306 and the telephone interface 308 and routes the appropriate commands and data to the printer interface 310. The command interpreter 316 will be described below with respect to Figs. 4 and 5. A FAX interface 318 is used to drive the telephone interface 308 and FCL module 320 is used to process commands sent by the FCL driver module 322 (Fig. 3) in order to set up parameters and process commands for the remote FAX machine 210 (Fig. 2). The FCL module 320 sends commands and data to the command interpreter 316 which processes those commands and sends them to the printer 206. The FCL module 320 also sends data directly to a PCL module 322. The PCL module 322 receives commands and data from the command interpreter and the FCL module 320, and passes those commands through the printer interface 310 to the printer 206 (Fig. 2). An SCL module 324 receives scanner command language commands from the SCL driver module 320 (Fig. 3) and passes those commands to scanner system software 326 which interfaces to the scanner system electronics 312.

This invention takes advantage of the fact that PCL printers save the state of the printer before performing a requested macro. Therefore, when the invention receives a FAX message, it places the FAX data within a PCL macro, sends the macro to the printer, and performs the macro. The printer, in performing the macro, will save the printer state, print the FAX data, and restore the printer state before indicating that the print is complete.

Table 1 shows a macro suitable for use with the first embodiment of present invention. In the following description of Table 1, the $\Sigma$ character represents the ASCII escape character. Line 1 gives the macro a number (1) for reference, and line 2 starts the macro definition. Line 3 sets the printer to use portrait orientation, and line 4 sets the paper size to letter size paper. Line 5 sets the printer to use 300 dots per inch graphics mode, and line 6 begins raster graphics data. Lines 1 through 6 make up the macro header in the example of Fig. 4.

Line 7 of table 1 will be replaced by the graphics data of the line to be printed. In the example of Fig. 4, line 7 would be replaced by a line of data received from the remote FAX machine.

Line 8 defines the end of the graphics data, and line 9 ends the macro definition. Lines 10 through 12 call the macro three times to print the data, and line 11 deletes the macro from the printer's memory, to conserve memory space. Lines 8 through 11 make up the macro trailer in the example of Fig. 4.

Fig. 4 shows flowcharts of the software of the command interpreter 316 of Fig. 3 for a first embodiment of the invention. This software is used to perform the switch function of the present invention, in conjunction with hardware described by the block diagram of Fig. 3. Referring now to Fig. 4, after entry, block 402 determines whether data or commands have been receive from the host over the host interface 306. If data or a command has been received from the host, block 402 transfers to block 404 which sets a flag indicating that the printer is being used by the host computer system. Block 406 then sets a timer, typically 10 to 15 seconds, which will be used to clear the printer in use flag if the host discontinues sending data to the printer. Block 408 then sends the data or command to the printer before returning to block 402 to continue the loop.

If data has not been received from the host, block 402 transfers to block 410. If data or a command has been received from the FCL module 320, block 410 transfers to block 412 which sets a flag indicating that the printer is currently being used by the FAX system. Block 414 then sets a timer value which will exit the loop if the FAX discontinues transmission. Block 415 determines if the FAX transmission is complete or if the timer value is zero, and transfers to block 420 when either of these conditions is true. If the FAX is still sending data and the timer is not zero, block 415 transfers to block 416 which sends a macro header for the PCL macro (lines 1 through 6 of Table 1) that will cause the printer to save its state, and block 417 signals the FCL module 320 to send one line of FAX data from the remote FAX system directly to the PCL module 322 which in turn sends it to the printer to cause the printer print the FAX data. Block 418 then sends a macro trailer (lines 8 through 13 of Table 1) to print the line three times and delete the macro. Control then transfers back to block 415 to loop until all FAX data has been received and sent to the printer. The macro trailer of the last line of FAX data will include a page eject command to skip to the next page and prepare the printer for the host system or the next FAX.

If a command or data has not been received from the host, block 402 transfers to block 410 which determines whether data or a command has been received from the FCL module 320. If nothing has been received from the FCL module, block 410 transfers to block 420 which determines whether any timeouts have occurred and if no timeouts have occurred, block 420 transfers back to block 402 to continue the loop.

Each time through the loop, if no data is currently being received from the host or the FAX machine, the timeout block 420 determines whether either the host or the FAX system has completed usage of the printer. If a timeout occurs, block 420 transfers to block 422 which clears any printer-in-use flags and then control returns to block 402 to continue the loop.

Each time data is received from the host or from the remote FAX, the timer value will be set to a new value, typically ten or fifteen seconds. When data is not being received, the timer is decremented and when it reaches zero, the switch stops usage of the printer. The FAX may also send an end of transmission signal which will cause the FCL module 320 to set the time value to zero, thus terminating usage by the FAX.

Tables 2 and 3 show macros suitable for use with the second embodiment of present invention. The macro of Table 2 will be sent once for each line of FAX data to be printed, and the macro of Table 3 will be sent once, after all the line macros have been sent, to execute and delete the line macros and then delete itself.

In the following description of Tables 2 and 3, the $\Sigma$ character represents the ASCII escape character. In the macro of Table 2, Line 1 gives the macro a number for reference. The #...# part of the line represents a number between 0 and 32767. Line 2 starts the macro definition. Lines 1 and 2 make up the macro header in the example of Fig. 5.

Line 3 of table 2 will be replaced by the graphics data of the line to be printed, which may include PCL commands for repositioning the cursor. In the example of Fig. 5, line 3 would be replaced by a line of data received from the remote FAX machine.

Line 4 defines the end of the graphics data, and line 5 ends the macro definition. Lines 4 and 5 make up the macro trailer in the example of Fig. 5.

Table 3 shows the macro that causes the macros of Table 2 to be executed and print the graphics. Line 1 of Table 3 gives the macro a number for reference. The number is represented by the #...# characters, and could be any number not used for the line macros. Line 2 starts the macro definition. Line 3 sets the printer to use portrait orientation, and line 4 sets the paper size to letter size paper. Line 5 sets the printer to use 300 dots per inch graphics mode, and line 6 begins raster graphics data. Lines 7 and 8 of Table 3 will be replaced by a series statements that cause each one of the line macros to be executed and then deleted. Line 9 ends the macro definition, and line 10 executes this macro, which, in turn, executes each of the line macros. Line 11 deletes this macro from the printer's memory, to conserve memory space.

Fig. 5 shows flowcharts of the software of the command interpreter 316 of Fig. 3 for a second embodiment of the invention. This software is used to perform the switch function of the present invention, in conjunction with hardware described by the block diagram of Fig. 3. Referring now to Fig. 5, after entry, block 502 determines whether data or commands have been receive from the host over the host interface 306. If data or a command has been received from the host, block 502 transfers to block 504 which sets a flag indicating that the printer is being used by the host computer system. Block 506 then sets a timer, typically 10 to 15 seconds, which will be used to clear the printer in use flag if the host discontinues sending data to the printer. Block 508 then sends the data or command to the printer before returning to block 502 to continue the loop.

If data or a command has not been received from the host, block 502 transfers to block 510. If data or a command has been received from the FCL module 320, block 510 transfers to block 512 which sets a flag indicating that the printer is currently being used by the FAX system. Block 514 then sets a timer value which will be used to exit the loop if the FAX discontinues transmitting. Block 515 determines if the FAX transmission is complete or if the timer value is zero, and if not, transfers to block 516. Block 516 sends a macro header for the PCL macro (lines 1 through 6 of Table 2) that will cause the printer to print a line of data, and block 417 signals the FCL module 320 to send one line of FAX data from the remote FAX system directly to the PCL module 322 which in turn sends it to the printer to cause the printer print the FAX data. Block 518 then builds a lines in the execution macro (Table 3) to call this line macro and to delete this line macro. Block 519 then sends a macro trailer (lines 8 and 9 of Table 2) to complete the macro. Control then transfers back to block 515 to loop until all FAX data has been received and sent to the printer.

Once all FAX data has been sent to the printer, block 515 transfers to block 524 which sends the execution macro (Table 3) to save the printer state, execute all the line macros, delete all the line macros, and delete itself. Block 526 then clears the printer in use flag before returning to block 502 to continue the loop.

If a command or data has not been received from the host, block 502 transfers to block 510 which determines whether data or a command has been received from the FCL module 320. If nothing has been received from the FCL module, block 510 transfers to block 520 which determines whether any timeouts have occurred and if no timeouts have occurred, block 520 transfers back to block 502 to continue the loop.

Each time through the loop, if no data is currently being received from the host or the FAX machine, the timeout block 520 determines whether either the host or the FAX system has completed usage of the printer. If a timeout occurs, block 520 transfers to block 522 which clears any printer-in-use flags and then control returns to block 502 to continue the loop.

Each time data is received from the host or from the remote FAX, the timer value will be set to a new value, typically ten or fifteen seconds. When data is not being received, the timer is decremented and when it reaches zero, the switch stops usage of the printer. The FAX may also send an end of transmission signal which will cause the FCL module 320 to set the time value to zero, thus terminating usage by the FAX.

Having thus described a presently preferred embodiment of the present invention, it will now be appreciated that the objects of the invention have been fully achieved, and it will be understood by those skilled in the art that many changes in construction and circuitry and widely differing embodiments and applications of the invention will suggest themselves without departing from the spirit and scope of the present invention. The disclosures and the description herein are intended to be illustrative and are not in any sense limiting of the invention, more preferably defined in scope by the following claims.

TABLE 1

| Line | Macro Statement |
|------|-----------------|
| 1 | Σ&f1Y |
| 2 | Σ&f0X |
| 3 | Σ&10O |
| 4 | Σ&12A |
| 5 | Σ*t300R |
| 6 | Σ*r0A |
| 7 | (raster graphics data for the line) |
| 8 | Σ*rB |
| 9 | Σ&f1X |
| 10 | Σ&f3X |
| 11 | Σ&f3X |
| 12 | Σ&f3X |
| 13 | Σ&f8X |

TABLE 2

| Line | Macro Statement |
|------|-----------------|
| 1 | Σ&f#...#Y |
| 2 | Σ&f0X |
| 3 | (raster graphics data for the line) |
| 4 | Σ*rB |
| 5 | Σ&f1X |

TABLE 3

| Line | Macro Statement |
|------|-----------------|
| 1 | Σ&f#...#Y |
| 2 | Σ&f0X |
| 3 | Σ&10O |
| 4 | Σ&12A |
| 5 | Σ*t300R |
| 6 | Σ*r0A |
| 7 | (stmt to execute each of the line macros) |
| 8 | (stmt to delete each of the line macros) |
| 9 | Σ&f1X |
| 10 | Σ&f3X |
| 11 | Σ&f8X |

## Claims

1. A system for scaling an image being displayed on a device, said system comprising:

   means (204, 316) for combining each line of data from said image into one of a plurality of predefined macros;

   means (310) for sending each of said plurality of predefined macros to said device; and

   means (310) for sending an execution macro to said device, said execution macro comprising means for executing each of said plurality of predefined macros a plurality of times, whereby each line of data from said image is scaled up and printed.

2. The system of claim 1 wherein said execution macro further comprises means for removing said plurality of macros from said device after said plurality of macros have been executed.

3. A system for sharing a printer between a computer and a facsimile machine, said system comprising:

   first transfer means (306) for transferring data and commands from said computer to said system;

   second transfer means (308) for transferring data and commands from said facsimile machine to said system;

   printer transfer means (310) for transferring data and commands from said system to said printer; and

   means for interrupting said first transfer means and allowing said second transfer means to transfer information to said printer transfer means comprising

   means (320) for copying each line of data received from said second transfer means to one of a plurality of predefined macros, and

   means (322) for transferring each of said plurality of predefined macros to said printer transfer means, whereby when each of said plurality of predefined macros is transferred to said printer and said line of data within each of said plurality of predefined macros is printed.

4. The system of claim 3 wherein each of said predefined macro further comprises means for printing said line of data a plurality of times.

5. The system of claim 3 wherein said means for interrupting further comprises means (402, 410, 412, 414) for continuously examining said first transfer means and said second transfer means and for connecting said second transfer means to said printer transfer means upon receiving a datum or command from said second transfer means.

6. The system of claim 5 further comprising means (420, 422) for disconnecting said second transfer means from said printer transfer means if said second transfer means sends a termination signal.

7. A system for sharing a printer between a computer and a facsimile machine, said system comprising:

   first transfer means (306) for transferring data and commands from said computer to said system;

   second transfer means (308) for transferring data and commands from said facsimile machine to said system;

printer transfer means (310) for transferring data and commands from said system to said printer; and

means for interrupting said first transfer means and allowing said second transfer means to transfer information to said printer transfer means comprising

means for copying (320) each line of data received from said second transfer means to one of a plurality of line macros,

means for transferring (322) each of said plurality of line macros to said printer transfer means, and

means for transferring (522) an execution macro to said printer transfer means, said execution macro further comprising means for executing each of said plurality of line macros to print said data.

8. The system of claim 7 wherein said execution macro further comprises means for executing each of said plurality of line macros a plurality of times, whereby said lines of data are printed a plurality of times to scale up said data.

9. The system of claim 8 wherein said means for interrupting further comprises means (502, 510, 512, 514) for continuously examining said first transfer means and said second transfer means and for connecting said second transfer means to said printer transfer means upon receiving a datum or command from said second transfer means.

10. The system of claim 9 further comprising means for disconnecting (520, 522) said second transfer means from said printer transfer means if said second transfer means sends a termination signal.

FIG. 1

EP 0 480 593 A2

FIG. 2

EP 0 480 593 A2

FIG. 3

ENTER

402 RECEIVE DATA/CMD FROM HOST ? — Y → SET PRINTER IN USE BY HOST 404

404 → SET TIMER 406

406 → SEND DATA/CMD TO PRINTER 408

N

410 RECEIVE DATA/CMD FROM FAX ? — N →

Y

SET PRINTER IN USE BY FAX 412

412 → 420 TIMEOUT — N →

SET TIMER 414

Y

CLEAR PRINTER IN USE FLAGS 422

415 FAX COMPLETE ? — Y →

N

SEND MACRO HEADER 416

SIGNAL FCL MODULE TO SEND LINE OF FAX DATA TO PCL MODULE 417

SEND MACRO TRAILER 418

FIG. 4

12

ENTER

RECEIVE DATA/CMD FROM HOST ? —502

Y → SET PRINTER IN USE BY HOST —504

N

RECEIVE DATA/CMD FROM FAX ? —510

SET TIMER —506

SEND DATA/CMD TO PRINTER —508

Y

SET PRINTER IN USE BY FAX —512

N

TIMEOUT —520

N

SET TIMER —514

Y

CLEAR PRINTER IN USE FLAGS —522

FAX COMPLETE ? —515

Y

N

SEND MACRO HEADER —516

SIGNAL FCL MODULE TO SEND LINE OF FAX DATA TO PCL MODULE —517

SEND EXECUTION MACRO —524

CLEAR PRINTER IN USE BY FAX —526

BUILD EXECUTE AND DELETE LINES FOR EXECUTION MACRO —518

SEND MACRO TRAILER —519

*FIG. 5*

13